# EUROPÄISCHE PATENTANMELDUNG

(11) **EP 4 649 809 A1**
(43) Veröffentlichungstag der Anmeldung: **19.11.2025**
(21) Anmeldenummer: 25167894.2
(22) Anmeldetag: 02.04.2025
(51) Int. Cl.: A01D 34/00, A01D 34/02, A01D 34/66, A01D 43/10, A01D 78/10, A01D 80/02, A01D 84/00

(54) **ANBAUGERÄT FÜR EINE SELBSTFAHRENDE LANDMASCHINE**

(30) Priorität: 13.05.2024 DE 102024113247
(71) Anmelder: CLAAS Saulgau GmbH, 88340 Bad Saulgau (DE)
(72) Erfinder: Fischer, Josef, 88400 Biberach (DE); Neitemeier, Dennis, 59510 Lippetal (DE); Witte, Johann, 58730 Fröndenberg (DE); Becker, Michael, 88367 Hohentengen (DE); Bönig Dr., Ingo, 33330 Gütersloh (DE); Birkmann, Christian, 33775 Versmold (DE); Rongvaux, Laurent, 54800 Tronville (FR); Reinhardt, Martin, 88367 Hohentengen (DE)
(74) Vertreter: CLAAS Gruppe

(57) **Zusammenfassung**

Bei einem Anbaugerät (10) für eine selbstfahrende Landmaschine zum Verarbeiten von auf einem Feld verteiltem Erntegut bildet wenigstens ein erster Sensor (12, 13, 19) für die Ermittlung von Parametern des Ernteguts eine Oberfläche des Anbaugeräts, die angeordnet ist, um beim Verarbeiten des Ernteguts mit dem Erntegut in körperlichen Kontakt zu kommen.

## Beschreibung

Die vorliegende Erfindung betrifft ein Anbaugerät für eine selbstfahrende Landmaschine, das zum Verarbeiten von auf einem Feld verteiltem Erntegut, wie etwa zum Mähen, Wenden, Schwaden und/oder Bergen von Grüngut eingesetzt wird.

Um einen effizienten Umgang mit dem Erntegut zu ermöglichen, ist es wichtig, über ausreichend Information darüber zu verfügen. Beim Mähen oder Schwaden gewonnene Daten über die Gutmenge erleichtern einen effizienten Abtransport; beim Mähen, Wenden oder Schwaden gewonnene Daten über den Feuchteanteil im Gut erleichtern einen effizienten Trocknungsvorgang, oder können eine Entscheidung über die weitere Verwendung des Ernteguts stützen, etc.

Aus DE10 2021 122 455 A1 ist ein Feldhäcksler bekannt, in dessen Auswurfkrümmer ein Sensor angeordnet ist, um Feuchtigkeit und Durchsatz des Ernteguts zu messen, das in Kontakt mit dem Sensor den Auswurfkrümmer durchläuft. Dieser Sensor kann in seiner bekannten Einbauposition die benötigten Informationen nicht liefern; auch wenn im Laufe des Aberntens eines Feldes mit Hilfe des Sensors zwar Information über die geborgene Gutmenge gewonnen werden, so kommt diese Information zu spät, um die in die Logistikplanung des Abtransports des Ernteguts vom Feld einzubeziehen. Auch Daten über den Feuchtegehalt liegen erst vor, wenn das Erntegut bereits gehäckselt ist, und kann daher nicht herangezogen werden, um über einen geeigneten Zeitpunkt für seine Bergung von Feld zu entscheiden.

Es besteht daher Bedarf nach Wegen, um solche Informationen zu sammeln.

Die Aufgabe wird gelöst durch ein Anbaugerät für eine selbstfahrende Landmaschine zum Verarbeiten von auf einem Feld verteiltem Erntegut, bei dem wenigstens ein erster Sensor für die Ermittlung von Parametern des Ernteguts eine Oberfläche des Anbaugeräts bildet, die angeordnet ist, um beim Verarbeiten des Ernteguts mit dem Erntegut in körperlichen Kontakt zu kommen.

Indem ein solcher Sensor mit dem Erntegut vor dessen Bergung vom Feld mit dem Erntegut in Kontakt kommen und dessen Parameter erfassen kann, stehen Daten zu einem frühen Zeitpunkt zur Verfügung, auf deren Grundlage dann Entscheidungen über die Bergung und ggf. weitere Verarbeitung des Ernteguts fundiert getroffen werden können. Wenn etwa das Anbaugerät ein Mähwerk, Wender oder Schwader ist, können so Informationen gewonnen werden, die für einen jeweils nachfolgenden Verarbeitungsschritt relevant sind; so kann z.B. anhand von Feuchtigkeitsdaten, die mit dem Mähwerk ermittelt werden, ein Zeitpunkt für ein erstes Wenden festgelegt werden; mit einem Wender gewonnene Feuchtigkeitsdaten ermöglichen eine Entscheidung, wann geschwadet oder evtl. erneut gewendet wird, und beim Schwaden kann noch einmal verifiziert werden, ob ein gewünschter Trocknungsgrad erreicht ist. Daten über die insgesamt zu bergende und ggf. abzutransportierende Gutmenge können von jedem der genannten Anbaugeräte ermittelt werden.

Einer Ausgestaltung zufolge ist die die durch den Sensor gebildete Oberfläche der Bodenoberfläche zugewandt, um Erntegut zu erfassen, das sich zwischen der Oberfläche des Anbaugeräts und der Bodenoberfläche befindet. Eine solche Anordnung ist insbesondere zweckmäßig bei Anbaugeräten wie etwa einem Wender, die das Erntegut zur Bearbeitung nicht in sich aufnehmen. Die Oberfläche kann z.B. die Unterseite einer sich auf der Bodenoberfläche abstützenden Kufe sein, eine Unterseite eines Balkens oder anderen starren horizontalen Bauteils, das im Betrieb von der Bodenoberfläche beabstandet ist, oder eine Oberfläche einer Schleppe sein, die im Einsatz über die Bodenoberfläche und ggf. darauf liegendes Erntegut schleift.

Vorzugsweise ist der wenigstens eine Sensor ein kapazitiver Sensor. Indem ein solcher Sensor auf die Permittivität seiner Umgebung anspricht, kann er Parameter erfassen, die mit der Dichte, der Masse, dem Massenstrom oder dem Feuchtigkeitsgehalt des Ernteguts verknüpft sind.

In einer bevorzugten Bauform umfasst der wenigstens eine Sensor mehrere Kondensatoren mit Kondensatorplatten, die benachbart zu der Oberfläche angeordnet sind, um ein elektrostatisches Feld in zu der Oberfläche benachbartem Erntegut zu erzeugen. Eine der Kondensatorplatten kann eine mehreren Kondensatoren gemeinsame erste Kondensatorplatte sein. Zweite Kondensatorplatten der mehreren Kondensatoren können unterschiedlich weit von der ersten Kondensatorplatte beabstandet sein, um elektrostatische Felder zu erzeugen, die sich unterschiedlich weit in den Raum vor der Oberfläche ausbreiten.

Wenigstens ein zweiter Sensor kann in einer anderen vertikalen Position als der erste Sensor angeordnet sein, um Aufschluss über die Dicke einer auf der Feldoberfläche liegenden Erntegutschicht zu gewinnen.

Einer Ausgestaltung zufolge handelt es sich bei dem Anbaugerät um ein Mähwerk. Hier kann der Sensor an einer Unterseite eines Schneidbalkens, einer Gleitkufe oder einer Schleppe vorgesehen sein.

Wenn es sich bei dem Anbaugerät um ein Mähwerk mit rotierendem Aufbereiter handelt, kann der Sensor insbesondere in einer Oberfläche angeordnet ist, die einem durch die Rotation des Aufbereiters beschleunigten Strom des Ernteguts ausgesetzt ist, wie etwa in einer den rotierenden Aufbereiter umgebenden Gehäusewand.

Wenn das Anbaugerät ein Mähwerk oder ein Schwader mit Querfördereinrichtung ist, kann der Sensor in die Querfördereinrichtung oder eine Wand eines Kanals integriert sein, durch den sich die Querfördereinrichtung erstreckt. Insbesondere wenn die Querfördereinrichtung eine Förderschnecke ist, ist die Anbringung in der Wand des Kanals sinnvoll, da das Erntegut durch die Drehung der Förderschnecke fest an die Wand angedrückt wird und dadurch ein deutliches Signal liefert. Alternativ kann die Querfördereinrichtung ein Transportband umfassen, auf dem das geförderte Erntegut aufliegt. Hier kann es für einen Kontakt mit dem Erntegut vorteilhafter sein, dass der Sensor in die Querfördereinrichtung selbst integriert ist.

Wenn es sich bei dem Anbaugerät um einen Schwader oder Wender handelt, kann der Sensor in einen Zinken des Schwaders oder Wenders, eine Schleppe oder ein Schwadtuch integriert sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Draufsicht auf einen Sensor;
- Fig. 2: eine Ansicht eines Mähwerks;
- Fig. 3: eine Detailansicht einer Baueinheit des Stängeldickesensors;
- Fig. 4: eine schematische Draufsicht auf einen Ausschnitt eines Maisgebisses; und
- Fig. 5: eine Detailansicht eines zweiten Maisgebisses .

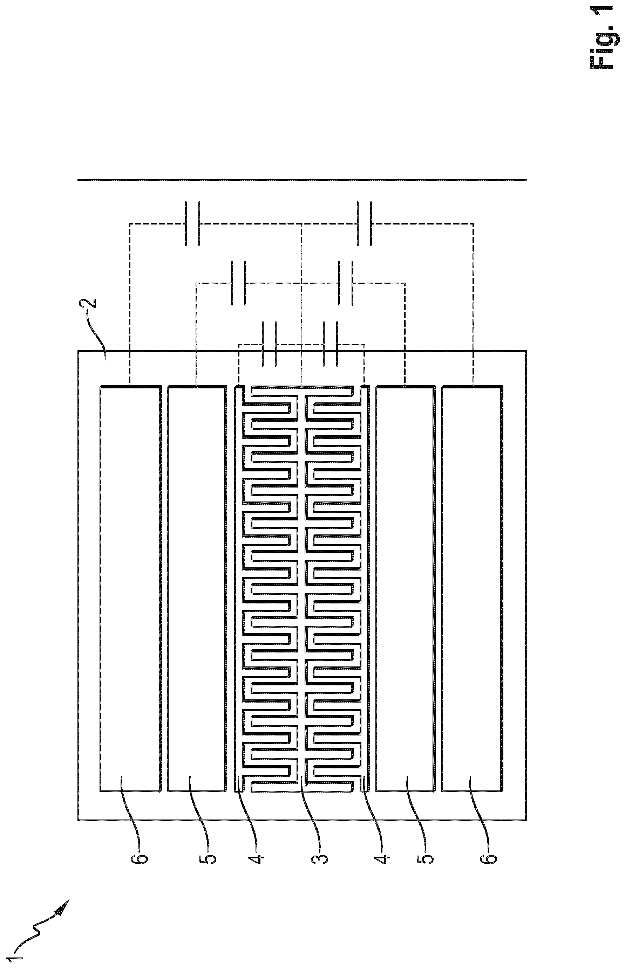

Fig. 1 zeigt einen in einem erfindungsgemäßen Anbaugerät zu verwendenden Sensor 1 in einer Draufsicht. Auf einem dielektrischen Substrat 2 sind mehrere Kondensatorplatten verteilt, darunter eine mehreren Kondensatoren gemeinsame erste Kondensatorplatte 3 und jeweils für einen der mehreren Kondensatoren spezifische zweite Kondensatorplatten, hier entsprechend ihrem Abstand von der gemeinsamen Kondensatorplatte 3 als nahe Kondensatorplatte 4, mittlere Kondensatorplatte 5 und ferne Kondensatorplatte 6 bezeichnet. Zwischen der ersten und den zweiten Kondensatorplatten erzeugte elektrische Felder breiten sich senkrecht zur Substratoberfläche umso weiter aus, je größer der Abstand zwischen den Kondensatorplatten ist. Dielektrisches Material, das sich in einem solchen Feld befindet, verändert lokal die Permittivität und damit die Kapazität eines jeden Kondensators, wobei das Ausmaß der Kapazitätsveränderung davon abhängt, welcher Anteil des Feldvolumens von dem dielektrischen Material belegt ist, wie dicht und wie feucht es ist. Da der belegte Anteil des Feldvolumens von einem Kondensator zum anderen variiert, kann aus unterschiedlichen Reaktionen der Kondensatoren auf die Anwesenheit des Materials in ihrem Feld zwischen den Einflüssen von Materialmenge oder -dichte einerseits und Feuchtegehalt andererseits unterschieden werden.

Indem die dem Erntegut ausgesetzte Oberfläche des Sensors 1 jeweils die von den Kondensatorplatten 3-6 abgewandte Oberfläche des Substrats 2 ist, sind zum einen die Kondensatorplatten vor Abrieb geschützt, zum anderen ist sichergestellt, dass der von Erntegut belegte Anteil am Feldvolumen nie für alle Kondensatoren derselbe sein kann, auch wenn Schicht des Ernteguts so dick ist, dass keines der Felder hindurchdringt, und der Einfluss des Ernteguts auf die Kapazität der Kondensatoren bei jeder Schichtdicke unterschiedlich ist.

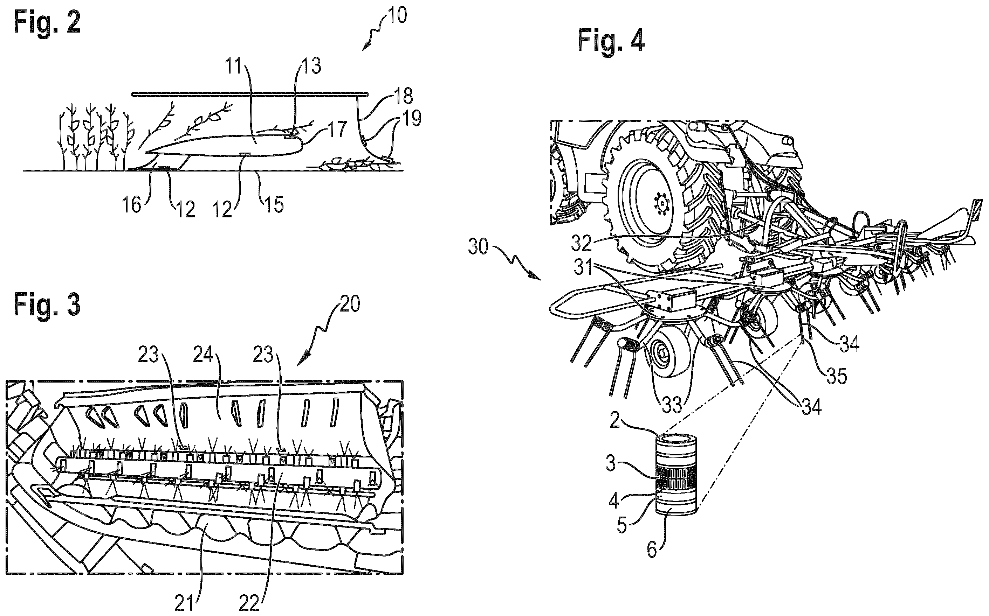

Fig. 2 zeigt einen schematischen Schnitt durch einen Mähbalken 11 eines Mähwerks 10, das mit Sensoren vom mit Bezug auf Fig. beschriebenen Typ, hier mit 12, 13 bezeichnet, ausgestattet ist. Rotierende oder oszillierende Messer an einer Vorderkante 14 des Mähbalkens 11 dienen zum Schneiden des Ernteguts. Der Sensor 12 ist an einer Unterseite des Mähbalkens 11 oder einer den Boden 15 unmittelbar berührenden, den Mähbalken 11 abstützenden Kufe 16 angeordnet, um - im Wesentlichen ungestört durch oberhalb des Mähbalkens 11 passierendes Erntegut die Feuchtigkeit des Bodens 15 abzuschätzen, da diese einen Einfluss auf die Zeit hat, die das geschnittene und auf dem Boden 15 verteilte Erntegut zum Trocknen benötigt.

Der Sensor 13 ist an der Oberseite des Mähbalkens 11 angeordnet und orientiert, um elektrische Felder über der Oberseite zu erzeugen, die in auf der Oberseite des Mähbalkens 11 aufliegendes Erntegut eindringen. Veränderungen der Kapazitäten der Kondensatoren des Sensors 13 erlauben einen Rückschluss auf die Masse oder Schichtdicke des aufliegenden Ernteguts und dessen Feuchtigkeitsgehalt. Der Sensor 13 ist nahe an einer Hinterkante 17 des Mähbalkens 11 angeordnet, um entlang der Vorderkante 14 geschnittenem Erntegut Zeit zu geben, auf den Mähbalken 11 zu fallen und so in den Erfassungsbereich des Sensors 13 zu gelangen.

Der Mähbalken 11 kann eingehaust sein, um insbesondere bei Verwendung von rotierenden Messern an seiner Vorderkante 14, zu verhindern, dass Erntegut weggeschleudert und unkontrolliert verstreut wird. Teil einer solchen Einhausung ist in an sich bekannter Weise eine Schleppe 18, die von einer Oberseite der Einhausung an deren Hinterkante herabhängt. Indem die Schleppe 18 in einem bodennahen Bereich, der beim Herüberstreichen über das hinter dem Schneidbalken 11 zu Boden gefallene Erntegut ausgelenkt wird, mit einem Sensor 19 vom in Fig. 1 gezeigten Typ bestückt ist, kann Aufschluss über die Schichtdicke des geschnittenen Ernteguts und seinen Feuchtegehalt gewonnen werden.

Denkbar ist, noch wenigstens einen weiteren Sensor 19 gleichen Typs in anderer Höhe an der Schleppe 17 vorzusehen. In der Darstellung der Fig. 2 ist der höhergelegene Sensor 19 zu weit von der Schicht des Ernteguts entfernt, als dass dieses seine Kapazitäten beeinflussen könnte; wäre die Schicht dicker, so käme es zum Kontakt zwischen ihr und dem Sensor. Indem mehrere Sensoren 19 in verschiedenen Höhen an der Schleppe 18 angebracht werden, kann also auch Aufschluss über die Dicke der Schicht und damit über die Menge des Ernteguts gewonnen werden.

Um ein starkes, rauscharmes Messsignal zu erhalten, ist bevorzugt, dass die Kondensatorplatten der Sensoren 19 jeweils in horizontaler Richtung, in Breitenrichtung der Schleppe 18, langgestreckt sind. So ist die Länge der Kondensatorplatten nur durch die Breite der Schleppe 18 begrenzt.

Fig. 3 zeigt ein Mähwerk 20 mit einem Mähbalken 21 und einem darüber angeordneten Aufbereiter 22, hier in Form eines zinkenbesetzten rotierenden Walze. Der Aufbereiter 22 verdeckt eine Querfördereinrichtung, typischerweise eine Förderschnecke, die in einem von dem Aufbereiter 222 und einer Haube 24 begrenzten langgestreckten Kanal das aufbereitete Erntegut seitwärts abtransportiert.

Ein Sensor 23 vom in Fig. 1 beschriebenen Typ ist hier in einer den Aufbereiter 22 umgebenden Haube 24 so angeordnet, dass seine Oberfläche dem vom Aufbereiter 22 abgeschleuderten oder dem von der Förderschnecke radial nach außen weggedrückten Erntegut ausgesetzt ist und aus der Menge dieses Ernteguts Rückschlüsse auf den Erntegutdurchsatz des Mähwerks 20 ermöglicht.

Fig. 4 zeigt einen Wender 30. Der Wender 30 umfasst in fachüblicher Weise mehrere rotierende Kreisel 31, die im Betrieb von einer vorgespannten Zugmaschine über eine Zapfwelle 32 drehangetrieben sind. Von einer Drehachse des Kreisels 31 radial abstehende Arme 33 sind mit federnden Zinken 34 bestückt. Die Drehachse jedes Kreisels 31 ist gegen die Normale der Bodenoberfläche geneigt, so dass die Zinken 34 jeweils nur auf einem Teil ihres Drehwegs in eine auf dem Boden verteilte Schicht von geschnittenem Erntegut eingreifen, um sie aufzulockern und durch Werfen entgegen der Fahrtrichtung der Zugmaschine zu wenden.

Um Dicke, Dichte und/oder Feuchtegehalt der Schicht zu beurteilen, ist wenigstens einer der Zinken 34 des Wenders 30, vorzugsweise wenigstens ein Zinken 34 an jedem Kreisel 31, mit einem Sensor 35 bestückt.

Der Sensor 35 umfasst wie in Fig.1 gezeigt eine erste und mehrere zweite Kondensatorplatten 3-6; allerdings ist das Substrat 2 nicht planar wie bei den bisher mit Bezug auf Fig. 2 und 3 betrachteten Sensoren, sondern zylindrisch oder zylindersegmentförmig, um am Zinken 34 Platz zu finden. Wenn die Kondensatorplatten 3-6 wie in der Figur gezeigt an der Außenseite des Substrats 2 angebracht sind, kann der gesamte Sensor 35 mit einer abriebfesten Schutzschicht überzogen sein.

Die Kondensatorplatten 3-6 des Sensors 35 verlaufen jeweils in Umfangsrichtung des Zylinders oder Zylindersegments.

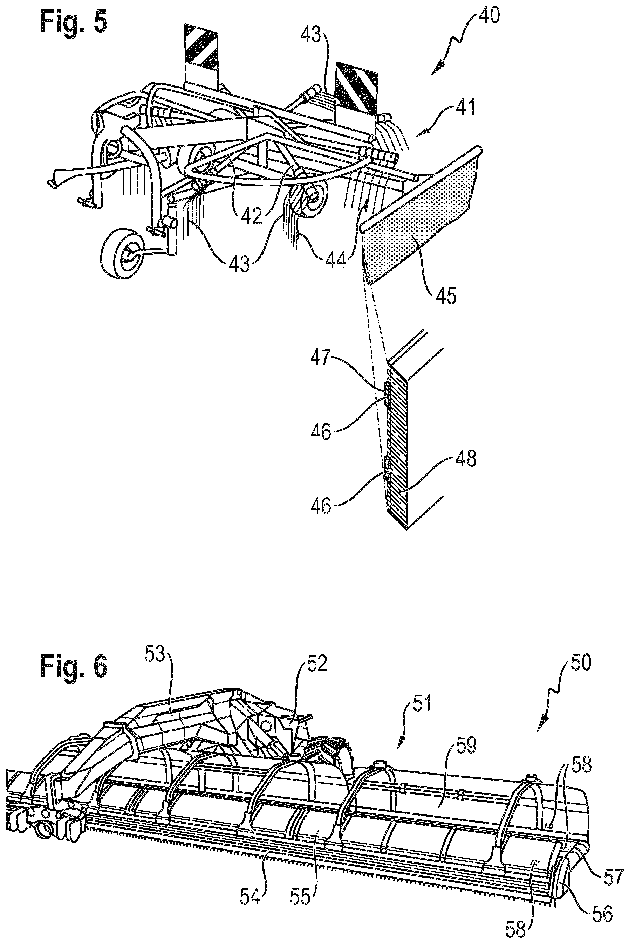

Fig. 5 zeigt einen Kreiselschwader 40. Der Kreiselschwader umfasst einen oder mehrere von einer nicht gezeigten Zugmaschine drehangetriebene Kreisel 41, dessen Arme 42 wie die des Wenders 30 federnde Zinken 43 tragen und von denen wenigstens einer wie mit Bezug auf Fig. 4 beschrieben mit einem Sensor 44 bestückt ist. Die Zinken 43 sind wie in Fig. 5 gezeigt zwischen einer vom Arm 42 aus abwärts gerichteten Stellung, in der sie in die Schicht des Ernteguts eingreifen, und einer horizontalen Stellung schwenkbar, in der der Eingriff mit der Schicht aufgehoben ist. Indem die Zinken 43 jeweils auf einem Teil ihres Weges, auf dem sie sich einem sich in Fahrtrichtung der Zugmaschine erstreckenden Schwadtuch 45 nähern, in die Schicht eingreifen und auf einem Teil des Weges, auf dem sie sich vom Schwadtuch 45 entfernen, aus der Schicht ausgerückt sind, formen die das Erntegut zu einem Schwad, der an seiner vom Kreisel 41 abgewandten Seite durch das Schwadtuch 45 begrenzt ist.

Alternativ oder ergänzend zum Sensor 44 kann ein Sensor 46 vom in Fig. 1 gezeigten Typ auch an dem Schwadtuch 45 angebracht sein; insbesondere kann er, wenn das Schwadtuch 45 aus mehreren Schichten 47, 48 laminiert ist, wie in der Ausschnittvergrößerung gezeigt, zwischen den Schichten eingebettet sein.

Wie im Falle der Schleppe 18 können mehrere Sensoren 46 in unterschiedlichen Höhen am Schwadtuch 45 angebracht sein, um die Höhe des Schwads erfassen und daraus die Menge des darin enthaltenen Ernteguts abschätzen zu können.

Schwader von großer Breite können anstatt als Kreiselschwader als Bandschwader 50 ausgeführt sein. Fig. 5 zeigt einen von zwei Auslegern 51 eines solchen Bandschwaders. Die Ausleger 51 sind spiegelbildlich zueinander an ein Fahrwerk 52 gekoppelt, das sich über einen sich im Bogen über die beiden Ausleger 51 erstreckenden Arm 53 an eine Zugmaschine koppelbar ist. Ein langgestreckter fingerbesetzter Rotor 54 an einer Vorderkante des Auslegers 51 dient dazu, das Erntegut vom Boden aufzunehmen und einem hier weitgehend unter einer langgestreckten Verschalung 55 verborgenen Aufbereiter 56 zuzuführen. Hinter dem Aufbereiter 56 erstreckt sich ein Förderband 57, das dazu dient, das Erntegut von beiden Auslegern 51 in der Mitte des Bandschwaders 50 zusammenzuführen und als Schwad auszulegen.

Sensoren 58 vom in Fig. 1 gezeigten Typ können hier an einer dem Aufbereiter 56 zugewandten Innenseite der Verschalung 55 in Kontakt mit dem Strom des vom Aufbereiter 56 bearbeiteten Ernteguts, oder an einer dem Förderband 57 zugewandten Seite einer Rückwand 59 des Auslegers 51 angebracht sein. Denkbar ist auch eine Anbringung in einer das obere Trum des Förderbands 57 tragenden Stützfläche, so dass das vom Sensor 58 erzeugte elektrische Feld durch das Förderband 57 hindurch in das auf dem Förderband 57 liegende Erntegut eindringt.

### Bezugszeichen

- 1: Sensor
- 2: Substrat
- 3: gemeinsame Kondensatorplatte
- 4: nahe Kondensatorplatte
- 5: mittlere Kondensatorplatte
- 6: ferne Kondensatorplatte
- 10: Mähwerk
- 11: Mähbalken
- 12: Sensor
- 13: Sensor
- 14: Vorderkante
- 15: Boden
- 16: Kufe
- 17: Hinterkante
- 18: Schleppe
- 19: Sensor
- 20: Mähwerk
- 21: Mähbalken
- 22: Aufbereiter
- 23: Sensor
- 24: Haube
- 30: Wender
- 31: Kreisel
- 32: Zapfwelle
- 33: Arm
- 34: Zinken
- 35: Sensor
- 40: Kreiselschwader
- 41: Kreisel
- 42: Arm
- 43: Zinken
- 44: Sensor
- 45: Schwadtuch
- 46: Sensor
- 47: Schicht
- 48: Schicht
- 50: Bandschwader
- 51: Ausleger
- 52: Fahrwerk
- 53: Arm
- 54: Rotor
- 55: Verschalung
- 56: Aufbereiter
- 57: Förderband
- 58: Sensor
- 59: Rückwand

## Patentansprüche

1. Anbaugerät (10, 20,3 30 40, 50) für eine selbstfahrende Landmaschine zum Verarbeiten von auf einem Feld verteiltem Erntegut, **dadurch gekennzeichnet, dass** wenigstens ein erster Sensor (12, 13, 19; 23; 35; 46) für die Ermittlung von Parametern des Ernteguts eine Oberfläche des Anbaugeräts bildet, die angeordnet ist, um beim Verarbeiten des Ernteguts mit dem Erntegut in körperlichen Kontakt zu kommen.

2. Anbaugerät nach Anspruch 1, bei dem die durch den Sensor (12, 19) gebildete Oberfläche der Feldoberfläche (15) zugewandt ist, um Erntegut zu erfassen, das sich zwischen der Oberfläche des Anbaugeräts (10) und der Feldoberfläche (15) befindet.

3. Anbaugerät (20, 50) nach Anspruch 1, bei dem die Oberfläche einen von dem Erntegut durchlaufenen inneren Kanal des Anbaugeräts begrenzt.

4. Anbaugerät nach einem der vorhergehenden Ansprüche, bei dem der wenigstens eine Sensor (12, 13, 19; 23; 35; 46) ein kapazitiver Sensor ist und/oder die Parameter mit der Dichte, der Masse, dem Massenstrom oder dem Feuchtigkeitsgehalt des Ernteguts verknüpft sind.

5. Anbaugerät nach einem der vorhergehenden Ansprüche, bei dem der wenigstens eine Sensor (12, 13, 19; 23; 35; 46) mehrere Kondensatoren mit Kondensatorplatten (3, 4, 5, 6) umfasst, die benachbart zu der Oberfläche angeordnet sind, um ein elektrostatisches Feld in zu der Oberfläche benachbartem Erntegut zu erzeugen, wobei optional eine der Kondensatorplatten eine mehreren Kondensatoren gemeinsame erste Kondensatorplatte (3) ist, und wobei ferner optional zweite Kondensatorplatten (4, 5, 6) der mehreren Kondensatoren unterschiedlich weit von der ersten Kondensatorplatte (3) beabstandet sind.

6. Anbaugerät nach einem der vorhergehenden Ansprüche, bei dem wenigstens ein zweiter Sensor (19, 46) in einer anderen vertikalen Position als der erste Sensor (19, 46) angeordnet ist.

7. Anbaugerät nach einem der Ansprüche 1 bis 6, bei dem es sich um ein Mähwerk (10, 20) handelt und optional der Sensor (12) an einer Unterseite eines Schneidbalkens (11), einer Gleitkufe (16) oder einer Schleppe (18) vorgesehen ist.

8. Anbaugerät nach einem der Ansprüche 1 bis 6, bei dem es sich um ein Mähwerk (20) mit rotierendem Aufbereiter (22) handelt und der Sensor (23) in einer Oberfläche (24) angeordnet ist, die einem durch die Rotation des Aufbereiters (22) beschleunigten Strom des Ernteguts ausgesetzt ist.

9. Anbaugerät nach einem der Ansprüche 1 bis 6, bei dem es sich um ein Mähwerk (20) oder einen Schwader (50) mit Querfördereinrichtung handelt und der Sensor (23, 58) in die Querfördereinrichtung (57) oder eine Wand (24, ) eines Kanals integriert ist, durch den sich die Querfördereinrichtung erstreckt.

10. Anbaugerät (20, 50) nach Anspruch 9, bei dem die Querfördereinrichtung eine Förderschnecke ist und die Wand (24) die Förderschnecke auf wenigstens einem Teil ihres Umfangs umgibt, oder die Querfördereinrichtung ein Förderband (57) ist.

11. Anbaugerät nach einem der Ansprüche 1 bis 6, bei dem es sich um einen Schwader (40) oder Wender (30) handelt und optional der Sensor (35, 44, 46) in einen Zinken (34, 43) des Schwaders (40) oder Wenders (30), eine Schleppe oder ein Schwadtuch (45) integriert ist.
